# EUROPÄISCHE PATENTSCHRIFT

(11) **EP 1 351 999 B1**
(45) Veröffentlichungstag und Bekanntmachung des Hinweises auf die Patenterteilung: **22.02.2012**
(21) Anmeldenummer: 01272001.7
(22) Anmeldetag: 12.12.2001
(51) Int. Cl.: C08F 10/02, C08F 4/28, C08F 2/38

(54) **Verwendung von geruchlosen Ethylenhomopolymeren**
Use of Nonodorous Ethylene Homopolymers
Utilisation d'homopolymères d'éthylène Inodores

(30) Priorität: 22.12.2000 DE 10064752
(43) Veröffentlichungstag der Anmeldung: 15.10.2003
(73) Patentinhaber: Basell Polyolefine GmbH, 50389 Wesseling (DE)
(72) Erfinder: MÄHLING, Frank-Olaf, 68167 Mannheim (DE); DECKERS, Andreas, 55234 Flomborn (DE); KÖHLER, Gernot, 53340 Meckenheim (DE); SCHMITZ, Axel, 50389 Wesseling (DE); WITTKOWSKI, Lars, 68167 Mannheim (DE); HOPPACH, Michael, 64572 Büttelborn/Worfelden (DE)
(86) Internationale Anmeldenummer: PCT/EP2001/014570
(87) Internationale Veröffentlichungsnummer: WO 2002/051885

(56) Entgegenhaltungen:
- EP-A- 0 449 092
- EP-A- 0 575 873
- WO-A-01/85807
- DE-A- 19 741 097
- RO-A- 75 587
- US-A- 3 334 081
- US-A- 4 135 044

## Beschreibung

Die vorliegende Erfindung betrifft die Verwendung von geruchlosen Ethylenhomopolymeren, hergestellt durch Homo-Polymerisation von Ethylen unter Hochdruckbedingungen unter Verwendung eines.aliphatischen Ketons als Molekulargewichtsregler, für Spritzgußanwendungen im Kosmetik-, Medizin- und Lebensmittelbereich.

Die Ethylenhomopolymerisation nach dem Hochdruckmasseverfahren ist allgemein bekannt. Die verwendeten Reaktoren werden meist kontinuierlich bei Drücken von 150 bis 350 MPa und bei Temperaturen von 150°C bis 350°C mit mittleren Verweilzeiten von 30 bis 180 Sekunden betrieben (Ullmann's Encyclopädie der technischen Chemie, 4. Auflage, Bd. 19/1980/S.169-178).

Die optischen und mechanischen Eigenschaften der so erhältlichen Ethylenpolymeren sind beispielsweise abhängig von deren Molmasse, Molmassenverteilung, Verzweigungsgrad, oder der Art, Länge und Verteilung der Verzweigungen. Geruch und Geschmack dieser Ethylenpolymeren ergeben sich dagegen vor allem durch die Anwesenheit von Verunreinigungen oder Zersetzungsprodukten von im Verfahren verwendeten Ausgangsstoffen. Initiator und/oder Molmassenregler können dabei schon während der Polymerisation zu Nebenprodukten (Dimere, Trimere, Oligomere und andere) führen, die einen unerwünschten Geruch oder Geschmack ergeben.

Besonders bei Verwendung der Ethylenpolymeren in der Medizin, Kosmetik oder im Lebensmittelbereich ist es wichtig, dass die Polymeren nicht nur eine gute Balance zwischen den mechanischen und optischen Eigenschaften haben, sondern auch geschmacks- und geruchsneutral sind.

Die Polymereigenschaften werden unter anderem durch die Wahl des Reaktors, z.B. Autoklav oder Rohrreaktor, die Temperatur, den Druck, die Polymerisationszeit oder Art und Konzentration von Comonomeren, Initiatoren oder Molmassenreglern beeinflusst. Zur Einstellung des geeigneten Molekulargewichts verwendet man als Molekulargewichtsregler oder kurz Regler bezeichnete Substanzen. Jeder Regler besitzt eine charakteristische Kettenübertragungskonstante, die angibt wie effektiv eine Substanz als Kettenregler reagiert. Zudem werden manche Regler als Comonomer in die Polymerketten eingebaut und führen dort zu zusätzlichen funktionellen Gruppen.

Ein häufig verwendeter Regler ist Wasserstoff, der aber bei der Verwendung von Luft oder Sauerstoff als Radikalstarter zur Bildung von Knallgas führen kann und deshalb aus sicherheitstechnischen Gründen Bedenken hervorruft. Außerdem kann Ethylen von Wasserstoff zu Ethan hydriert werden.

Weitere häufig verwendete molmassenbeeinflussende Comonomere bzw. Regler sind Kohlenmonoxid CO und Kohlenwasserstoffe wie beispielsweise Ethan, Propan oder Propen. Kohlenmonoxid ist stark giftig, so dass bei der Verwendung aufwendige Sicherheitsmaßnahmen erforderlich sind. Gasförmige Regler wie Ethan, Propan und Propen erfordern ebenfalls strenge Sicherheitsregeln.

Die Verwendung von Ketonen als Molekulargewichtsregler bei der Herstellung von LDPE ist bereits bekannt. In EP-A 0 928 797 wird ein Verfahren mit mindestens einem Autoklavenreaktor unter Verwendung von Carbonylverbindungen, z.B. Methylethylketon oder Propionaldehyd als Regler vorgeschlagen, mit Hilfe dessen ein LDPE hergestellt wird, das 0,1 bis 0,5 Gew.% Carbonylgruppen enthält.

In DE-A 1 908 964 wird ein Verfahren offengelegt, durch das sich Ethylenhomopolymerisate im Hochdruckverfahren herstellen lassen. Kennzeichnend an dem beschriebenen Verfahren ist die Verwendung eines peroxidischen Radikalstarters in der ersten Reaktionszone und Luft in der zweiten. Als Regler werden Propionaldehyd oder Methylethylketon empfohlen. Man erhält ein hochmolekulares Polyethylen, welches insbesondere zur Herstellung hochtransparenter Feinfolien oder widerstandsfähiger Verpackungsfolien geeignet ist.

In US 3,334,081 wird ein Hochdruck-Polymerisationsverfahren mit erhöhtem Umsatz beschrieben, das auf der Einspeisung von Ethylen an mindestens zwei verschiedenen Stellen des Reaktors beruht. Als Radikalstarter werden eine Vielzahl von organischen Peroxiden und als Regler eine Vielzahl organischer Verbindungen, bevorzugt Ketone wie beispielsweise Methylethylketon, empfohlen.

US 3,317,504 beschreibt ein Verfahren zur Herstellung von Polyethylen mittels einer speziellen Temperaturführung und die Verwendung von Molekulargewichtsregler, unter anderem Methylethylketon.

Im rumänischen Patent RO 75,587 (Priorität: 18.04.1979, aus CA 96: 200372s) wird die Herstellung geruchloser LDPE-Sorten beschrieben. Als Regler wird eine Mischung von Methylvinylketon mit Propan, Ethan und CO verwendet, zum Starten der Reaktion eine Mischung verschiedener organischer Peroxide. Die Verwendung von CO ist aber wegen der starken Giftigkeit von Nachteil, weil die Rohre und der Reaktorausgang speziell gegen Entweichen von CO gesichert werden müssen.

Es bestand die Aufgabe, Ethylenhomopolymere zur Darstellung von Spritzgußprodukten im Kosmetik-, Medizin-, und Lebensmittelbereich in einem Rohrreaktor bei hohen Umsätzen herzustellen, welche gute organoleptische Eigenschaften haben, d.h. geruchlos und geschmacklos sind und dabei gleichzeitig gute mechanische und optische Eigenschaften aufweisen.

Dementsprechend wurde ein Verfahren zur Herstellung von Ethylenhomopolymeren mit Dichten von 920 bis 935 kg/m³ und einem Schmelzflussindex gemäß DIN 53735 (190°C/216kg) von 30 bis 50 g/10 min in einem Rohrreaktor mit zwei oder mehr Polymerisationszonen bei Temperaturen von 150°C bis 350°C und Drücken im Bereich von 500 bis 5000 bar unter ausschließlichen Verwendung von Sauerstoff als Initiator in allen Reaktionszonen gefunden, dadurch gekennzeichnet, dass man als Molmassenregler ein oder mehrere aliphatische Ketone der allgemeinen Formeln I verwendet,
worin die Variable R¹ ein C₁-C₆-Alkyl oder C₃-C₁₂-Cycloalkyl ist.

Dabei ist die Variable R¹ ausgewählt aus
- C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;

Bevorzugte Molmassenregler sind Aceton, Methylethylketon "MEK", Methylisobutylketon "MIBK" oder 2-Pentanon und besonders bevorzugt ist Methylethylketon.

Der gesamte Molmassenregler kann dem Reaktionsgemisch vor dem Eintritt in den Rohrreaktor zudosiert werden. Er kann aber auch zusammen mit weiterem Polymerisationsinitiator an unterschiedlichen Stellen entlang des Rohrreaktors zudosiert werden. Üblicherweise werden 10 bis 200 mol Molmassenregler pro t Polymer, bevorzugt 20 bis 100 mol/t verwendet.

Die Polymerisation wird in einem Rohrreaktor bei Drücken von 500 bis 5000 bar durchgeführt, wobei Drücke von 1500 und 3500 bar bevorzugt und Drücke von 1900 bis 3100 bar besonders bevorzugt sind. Die Reaktionstemperaturen liegen oberhalb 40°C. Die Reaktionstemperatur beträgt 150°C bis 350°C, bevorzugt sind 200°C bis 330°C und ganz besonders bevorzugt 250°C bis 320°C.

Das Verhältnis von Länge zu Durchmesser des Rohrreaktors liegt vorzugsweise im Bereich von 10 000 bis 50 000, besonders bevorzugt 15 000 bis 35 000.

Im allgemeinen liegt die mittlere Verweilzeit des Reaktionsgemisches im Rohrreaktor zwischen 30 und 300, insbesondere 60 und 180 Sekunden.

Der Rohrreaktor kann üblicherweise zur Abfuhr der Reaktionswärme mit einem gekühlten Mantel versehen sein. Bevorzugt ist hierbei ein Heißwassermantel, wobei dieser auch segmentiert sein kann.

Als Initiator wird erfindungsgemäss Sauerstoff oder einfachheitshalber Luft verwendet. Der Sauerstoff wird üblicherweise in Mengen im Bereich von 1 bis 1000 g/t erzeugtes Polyethylen, vorzugsweise von 5 bis 500 g/t und besonders bevorzugt von 20 bis 200 g/t eingesetzt.

In einer bevorzugten Ausführungsform besitzt der Rohrreaktor mindestens zwei Reaktionszonen, in die jeweils zusätzliches kaltes oder vorgewärmtes Monomer und/oder kaltes oder vorgewärmtes Comonomer als Frischgasstrom vor Beginn jeder Reaktionszone zudosiert wird. Bevorzugt sind zwei bis vier aufeinanderfolgende Reaktionszonen, wobei die Polymerisation in jeder Zone durch Zugabe des Initiators wieder neu gestartet wird. Für die Durchführung eignen sich u.a. Rohrreaktoren, welche mit einer Reihe von Einlaßstellen für den Initiator sowie für die Zufuhr weiterer Monomermengen versehen sind.

Auch Reaktoren, wie sie in US-PSen 4,135,044 und 4,175,169 beschrieben sind, können mit dem erfindungsgemäßen Verfahren betrieben werden. Hierbei hat der Rohrreaktor in jeder Reaktionszone, von der Initiatordosierung bis zum Temperaturmaximum einen vergleichsweise geringeren Rohrdurchmesser bezogen auf den vergrößerten Rohrdurchmesser in der daran anschließenden Kühlzone (vom Temperaturmaximum bis zur nächsten Initiatordosierung). Dadurch kann ein hoher Umsatz bei relativ geringem Druckabfall über die Länge des Reaktors erreicht werden.

Das beschriebene Verfahren läßt sich sowohl für die Homopolymerisation als auch für die Copolymerisation von Ethylen mit anderen Monomeren verwenden, unter der Voraussetzung, daß diese Monomeren unter Hochdruck mit Ethylen radikalisch copolymerisieren. Beispiele geeigneter copolymerisierbarer Monomere sind ethylenisch ungesättigte C₃- bis C₈-Carbonsäuren, insbesondere Maleinsäure, Fumarsäure, Itaconsäure, Acrylsäure, Methacrylsäure und Crotonsäure, ethylenisch ungesättigte C₃- bis C₁₅-Carbonsäureester oder -anhydride, insbesondere Methacrylsäuremethylester, Methacrylsäureethylester, Methacrylsäure-n-butylester oder Methacrylsäure-tert.-butylester, Acrylsäuremethylester, Acrylsäureethylester, Acrylsäure-n-butylester, Acrylsäure-2-ethylhexylester, Acrylsäure-tert.-butylester, Methacrylsäureanhydrid, Maleinsäureanhydrid oder Itaconsänreanhydrid und α-Olefine, wie Propen, 1-Buten, 1-Penten, 1-Hexen, 1-Octen oder 1-Decen. Außerdem können Vinylcarboxylate, besonders bevorzugt Vinylacetat als Comonomer verwendet werden. Der Anteil an Comonomer bzw. Comonomeren im Reaktionsgemisch bezogen auf die Menge an Ethylenmonomer kann 0,1 bis 45 Ges.-% betragen. Besonders bevorzugt sind Ethylenhomopolymere.

Nach dem erfindungsgemäßen Verfahren lassen sich Ethylenhomopolymere mit besonders günstigen Eigenschaften darstellen. Die erfindungsgemäßen Ethylenhomopolymere weisen Dichten von 920 bis 935 kg/m³, bevorzugt von 922 bis 930 kg/m³ und besonders bevorzugt von 924 bis 927 kg/m³ auf. Der Schmelzflußindex gemäß ISO 1133 (190°C/2,16 kg) dieser Ethylenpolymere liegt von 30 bis 50 g/10 min, insbesondere von 36 bis 50 g/10 min und besonders bevorzugt von 40 bis 45 g/10 min. Dies erlaubt es, dünnwandige Behältnisse mit Wanddicken im Bereich von 0,3 bis 0,5 mm mit kurzen Werkzeugfüllzeiten zu erzeugen.

Ferner eignen sich die nach dem beschriebenen Verfahren hergestellten Polymerisate, insbesondere die Ethylenhomopolymerisate besonders gut zur Darstellung von Spritzgussprodukten im Kosmetik-, Medizin- und Lebensmittelbereich. Spritzgussprodukte, welche aus den erfindungsgemäßen Ethylenhomopolymerisaten hergestellt werden, weisen hervorragende optische und mechanische Eigenschaften auf. Bevorzugt sind Kunststoffformteile wie z.B. Flaschen mit einem E-Modul von 200 bis 400 N/m², bevorzugt von 280 bis 350 N/m² und einer Spannungsrissbeständigkeit ESCR von mindestens 30 min, bevorzugt mindestens 50 min und besonders bevorzugt von mindestens 60 min. Die hergestellten Formteile haben ausserdem eine sehr gute Oberflächenqualität ohne Schlieren und Fließmarkierungen.

Im Bereich der Kartonverpackungen (TetraPak®, CombiBlock®) eignen sich die erfindungsgemässen Ethylenhomopolymere besonders zur Herstellung von Ausgießhilfen oder Einschweißverschlüssen, sowie Kombinationen aus beidem. Auch die gesamte Verpackungs- bzw. Kartonoberseite mit integriertem Verschluß kann aus den erfindungsgemässen Ethylenhomopolymere hergestellt werden.

Während die Ausgießhilfen und Einschweißverschlüsse während der Lagerung meist nicht mit dem Füllgut in Kontakt kommen (Alufolien-Siegelschicht), steht das Füllgut bei der TetraTop-Verpakkung (Kartonoberseite) in ständigem Kontakt mit dem Kunststoff. Entsprechend hoch sind hierbei die Anforderungen an den Werkstoff bzgl. Organoleptik, da das Füllgut (z.Zt. meist Fruchtsäfte) geruchlich und geschmacklich nicht beeinträchtigt werden soll.

Ein weitere Anwendungsgebiet für das beschriebene Ethylenhomopolymere sind Deckel für s.g. Kombiverpackungen (Alu-beschichtete Karton-Verpackungen), wie sie u.a. für Kartoffelchips, Kaba, Kindergetränkepulver, Fertigsuppen, usw. eingesetzt werden. Bei dieser Anwendung kommt das Füllgut während der Lagerung zwar nicht unmittelbar mit dem Kunststoffdeckel in Berührung, da das Gebinde zwecks Sauerstoffbarriere meist mit einer Alu-Siegelfolie verschlossen ist, beim Entfernen des Kunststoffdeckels wird aber ein unangenehmer Geruch, gerade bei Kindergetränkepulvern und Chips-Verpackungen, als äußerst störend empfunden.

Des weiteren finden die beschriebenen Ethylenhomopolymere Anwendung in Tampax-Tube-Applikatoren. Auch hier sollte beim Öffnen der Verpackung kein unangenehmer Geruch wahrnehmbar sein.

Sowohl vor als auch nach der Verarbeitung zu Kunststoffformteilen zeigen die erfindungsgemässen Ethylenhomopolymere sehr gute orga-, noleptische Eigenschaften. Sie wurden von den befragten Probanden als geruchlos eingestuft. Das ist insofern überraschend, weil sowohl die verwendeten Ketone und insbesondere Methylethylketon als auch Dimere, Trimere und ähnliche Produkte einen charakteristischen und keinesfalls angenehmen Eigengeruch aufweisen.

Die Messung der organoleptischen Eigenschaften lässt sich apparativ, beispielsweise durch Gaschromatographie oder Differentialthermogravimetrie, bestimmen, wobei durch getrennte oder hintereinandergeschaltete Messapparaturen die Menge und die Art der entweichenden flüchtigen Verbindungen ermittelt wird. Von hoher Signifikanz sind die Tests durch Probandenteams.

Die Erfindung war auch insofern überraschend, als die häufig verwendeten Aldehyde, beispielsweise Propionaldehyd, zu Polymeren führen, die einen charakteristischen unangenehmen Geruch aufweisen und als Komponente für die oben genannten Anwendungen nur nach aufwändiger Verarbeitung geeignet sind. Selbst nach intensiver Bearbeitung mit Wasserdampf lässt sich noch ein schwacher, aber unangenehmer Geruch feststellen. Ausserdem können durch das erfindungsgemässe Verfahren Umsätze von mehr als 25 %, typischerweise sogar > 30% erreicht werden.

Die Erfindung wird durch Arbeitsbeispiele erläutert.

### Beispiele und Vergleichsversuche

Die Beispiele und Vergleichsversuche wurden in einem röhrenförmigen Reaktorgefäß mit einer Länge von 560 m und einem Verhältnis von Länge zu Durchmesser von 26 500 durchgeführt. Luft wurde dem Ethylen im Verdichterbereich zudosiert und in mehreren Stufen auf den jeweiligen Reaktionsdruck komprimiert und den Einlaßstellen des Rohrreaktors zugeführt.

Die bei der Polymerisation freiwerdende Reaktionswärme wurde der Reaktionsmischung über einen Kühlmittelkreislauf entzogen. Das resultierende Polymerisat wurde in üblicher und bekannter Weise in dem Reaktor nachgeschalteten Abscheidern von nicht umgesetztem Ethylen und anderen niedermolekularen Verbindungen abgetrennt und über einen Extruder und Granulator ausgetragen und konfektioniert. Nicht umgesetztes Ethylen wurde in mehreren Stufen gereinigt und auf die Saugseite der Verdichter zurückgeführt. Die Einzelheiten sind aus Ullmans Encyclopädie der technischen Chemie, Band 19, S.169-178 (1980) zu entnehmen.

Die Eigenschaften der resultierenden Polymerisate wurden nach den folgenden Methoden bestimmt und sind Tabelle 1 zu entnehmen:
der Schmelzflußindex (Melt Flow Index, MFI) bei einer Temperatur von 190 °C und einer Auflagekraft von 2,16 kg nach ISO 1133 und die Dichte nach ISO 1183.

Aus den Polymerisaten wurden in üblicher und bekannter Weise Spritzgußprüfkörper hergestellt, die mittels Probanden auf Geruch und Geschmack untersucht wurden.

Verwendete Abkürzungen: MEK Methylethylketon, PA: Propionaldehyd, PE: Polyethylen.

**Tabelle 1: Polymerisationsbedingungen der Beispiele 1 - 4 und der Vergleichsbeispiele V1 - V4.**

| Nr. | Regler (Stoff) | Initiatortyp | Regler [kg/h] | Ausbeute [t PE/h] | Dichte [g/cm³] | MFI [g/cm³] |
|---|---|---|---|---|---|---|
| 1 | MEK | Luft | 20,6 | 2,1 | 0,9256 | 38 |
| 2 | MEK | Luft | 19,8 | 2,0 | 0,9260 | 41 |
| 3 | MEK | Luft | 22,7 | 2,2 | 0,9261 | 45 |
| 4 | Aceton | Luft | 31,4 | 2,0 | 0,9255 | 44 |
| V1 | PA | Luft | 8,4 | 2,1 | 0,9257 | 41 |
| V2 | PA | Peroxid | 8,5 | 1,9 | 0,9259 | 52 |
| V3 | PA | Peroxid | 8,2 | 2,0 | 0,9257 | 48 |
| V4 | MEK | Peroxid | 20,5 | 2,0 | 0,9260 | 45 |

### Organoleptische Prüfung der Polymerisate

zur Prüfung der Polymere aus den oben aufgeführten Beispielen 1 bis 4 und V1 bis V4 wurden die Proben jeweils zwei Gruppen von Probanden vorgelegt. Probandenteam 1 bestand aus 23 Personen ohne besondere Vorbildung. Probandenteam 2 bestand aus 12 Personen, die professionell Geruchs- und Geschmacksproben durchführen. Die Benotung erfolgte jeweils mit Noten (1: sehr gut, 2: gut, 3: befriedigend, 4: ausreichend, 5 mangelhaft) und findet sich in Tabelle 2.

**Tabelle 2: Organoleptische Prüfung**

| Probe | Probandenteam 1 | Probandenteam 2 | Verwendeter Initiator | Verwendeter Regler |
|---|---|---|---|---|
| 1 | 1,5 | 2 | Luft | MEK |
| 2 | 1 | 1,5 | Luft | MEK |
| 3 | 1 | 1 | Luft | MEK |
| 4 | 2 | 2,5 | Luft | Aceton |
| V1 | 3,5 | 4 | Luft | PA |
| V2 | 4 | 4 | Peroxid | PA |
| V3 | 4 | 4 | Peroxid | PA |
| V4 | 3 | 3 | Peroxid | MEK |

## Patentansprüche

1. Verwendung von Ethylenhomopolymeren mit Dichten von 920 bis 935 kg/m³ und einem Schmelzflussindex gemäß DIN 53735 (190°C/2,16 kg) von 30 bis 50 g/10 min erhältlich in einem Rohrreaktor mit zwei oder mehr Polymerisationszonen bei Temperaturen von 150°C bis 350°C und Drücken im Bereich von 500 bis 5000 bar unter ausschließlicher Verwendung von Sauerstoff als Initiator in allen Reaktionszonen, wobei als Molmassenregler ein oder mehrere aliphatische Ketone der allgemeinen Formel I verwendet werden, 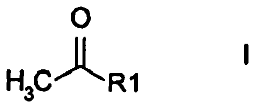 in der die Variable R¹ ein C₁-C₆-Alkyl oder C₃-C₁₂-Cycloalkyl ist, zur Darstellung von Spritzgussprodukten im Kosmetik-, Medizin- und Lebensmittelbereich.

2. Verwendung von Ethylenhomopolymeren mit Dichten von 920 bis 935 kg/m³ und einem Schmelzflussindex gemäß DIN 53735 (190°C/2, 16 kg) von 30 bis 50 g/10 min erhältlich in einem Rohrreaktor mit zwei oder mehr Polymerisationszonen bei Temperaturen von 150°C bis 350°C und Drücken im Bereich von 500 bis 5000 bar unter ausschließlicher Verwendung von Sauerstoff als Initiator in allen Reaktionszonen, wobei als Molmassenregler ein oder mehrere aliphatische Ketone der allgemeinen Formel 1 verwendet werden, 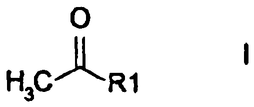 in der die Variable R¹ ein C₁-C₆-Alkyl oder C₃-C₁₂-cycloalkyl ist, zur Darstellung von Spritzgussprodukten ausgewählt aus der Gruppe Ausgießhilfen, Einschweißverschlüsse, Verpackungsoberseiten mit integriertem Verschluss, Deckel für Kombiverpackungen oder Tampax-Tube-Applikatoren.

3. Spritzgussprodukte im Kosmetik-, Medizin- und Lebensmittelbereich, enthaltend Ethylenhomopolymere mit Dichten von 920 bis 935 kg/m³ und einem Schmelzflussindex gemäß DIN 53735 (190°C/2,16 kg) von 30 bis 50 g/10 min erhältlich in einem Rohrreaktor mit zwei oder mehr Polymerisationszonen bei Temperaturen von 150°C bis 350°C und Drücken im Bereich von 500 bis 5000 bar unter ausschließlicher Verwendung von Sauerstoff als Initiator In allen Reaktionszonen, wobei als Molmassenregler ein oder mehrere aliphatische Ketone der allgemeinen Formel I verwendet werden, 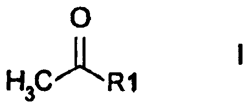 in der die Variable R¹ ein C₁-C₆-Alkyl oder C₃-C₁₂-Cycloalkyl ist, zur Darstellung von Spritzgussprodukten im Kosmetik-, Medizin- und Lebensmittelbereich.

## Claims

1. Use of ethylene homopolymers witch densities of 920 to 935 kg/m³ and a melt flow index to DIN 53735 (190°C/2.16 kg) of 30 to 50 g/10 min obtainable in a tubular reactor having two or more polymerisation zones at temperatures of 150°C to 350°C and pressures in the range from 500 to 5000 bar exclusively using oxygen as initiator in all reaction zones, the chain-transfer agent used being one or more aliphatic ketones of the general formula I, 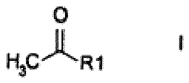 in which the variable R¹ is a C₁-C₆ alkyl or C₃-C₁₂ cycloalkyl, for producing injection moulded products in the cosmetics, medical and foodstuffs sector.

2. Use of ethylene homopolymers witch densities of 920 to 935 kg/m³ and a melt flow index to DIN 53735 (190°C/2.16 kg) of 30 to 50 g/10 min obtainable in a tubular reactor having two or more polymerisation zones at temperatures of 150°C to 350°C and pressures in the range from 500 to 5000 bar exclusively using oxygen as initiator in all reaction zones, the chain-transfer agent used being one or more aliphatic ketones of the general formula I, 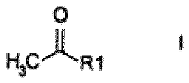 in which the variable R¹ is a C₁-C₆ alkyl or C₃-C₁₂ cycloalkyl, for producing injection moulded products selected from the group of pouring aids, welded-sin closures, packaging tops witch an integral closure, lids for combination packages or tampon tube applicators.

3. Injection moulded products in the cosmetics, medical and foodstuffs sector containing ethylene homopolymers witch densities of 920 to 935 kg/m³ and a melt flow index to DIN 53735 (190°C/2.16 kg) of 30 to 50 g/10 min obtainable in a tubular reactor having two or more polymerisation zones at temperatures of 150°C to 350°C and pressures in the range from 500 to 5000 bar exclusively using oxygen as initiator in all reaction zones, the chain-transfer agent used being one or more aliphatic ketones of the general formula I, 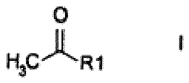 in which the variable R¹ is a C₁-C₆ alkyl or C₃-C₁₂ cycloalkyl, for producing injection moulded products in the cosmetics, medical and foodstuffs sector.

## Revendications

1. Utilisation d'homopolymères d'éthylène présentant des densités de 920 à 935 kg/m³ et un indice de fluidité à chaud selon la norme DIN 53735 (190°C/2,16 kg) de 30 à 50 g/10 min, pouvant être obtenus dans un réacteur tubulaire doté de deux zones de polymérisation ou plus à des températures de 150°C à 350°C et des pressions dans la plage de 500 à 5000 bars avec utilisation exclusive d'oxygène comme initiateur dans toutes les zones de réaction, une ou plusieurs cétones aliphatiques de formule générale I étant utilisées comme agent de régulation de la masse molaire, 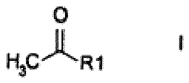 dans laquelle la variable R¹ représente C₁-C₆-alkyle ou C₃-C₁₂-cycloalkyle, pour la fabrication d'objets moulés par injection dans le domaine de la cosmétique, de la médecine et de l'alimentation.

2. Utilisation d'homopolymères d'éthylène présentant des densités de 920 à 935 kg/m³ et un indice de fluidité à chaud selon la norme DIN 53735 (190°C/2,16 kg) de 30 à 50 g/10 min, pouvant être obtenus dans un réacteur tubulaire doté de deux zones de polymérisation ou plus à des températures de 150°C à 350°C et des pressions dans la plage de 500 à 5000 bars avec utilisation exclusive d'oxygène comme initiateur dans toutes les zones de réaction, une ou plusieurs cétones aliphatiques de formule générale 1 état utilisées comme agent de régulation de la masse molaire, 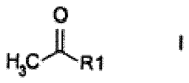 dans laquelle la variable R¹ représente C₁-C₆-alkyle ou C₃-C₁₂-cycloalkyle, pour la fabrication d'objets moulés par injection, choisis dans le groupe formé par les systèmes d'aide au déversement, les systèmes d'emballage sous vide, les faces supérieures d'emballages dotées d'une fermeture intégrée, les couvercles pour emballages combinés ou les tubes applicateurs pour tampax.

3. Objets moulés par injection dans le domaine de la cosmétique, de la médecine et des aliments, contenant des homopolymères d'éthylène présentant des densités de 920 à 935 kg/m³ et un indice de fluidité à chaud selon la norme DIN 53735 (190°C/2,16 kg) de 30 à 50 g/10 min, pouvant être obtenus dans un réacteur tubulaire doté de deux zones de polymérisation ou plus à des températures de 150°C à 350°C et des pressions dans la plage de 500 à 5000 bars avec utilisation exclusive d'oxygène comme initiateur dans toutes les zones de réaction, une ou plusieurs cétones aliphatiques de formule générale I étant utilisées comme agent de régulation de la masse molaire, 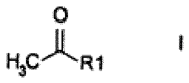 dans laquelle la variable R¹ représente C₁-C₆-alkyle ou C₃-C₁₂-cycloalkyle, pour la fabrication d'objets moulés par injection dans le domaine de la cosmétique, de la médecine et de l'alimentation.
